# FASCICULE DE BREVET EUROPEEN

(11) **EP 0 905 063 B1**
(45) Date de publication et mention de la délivrance du brevet: **28.11.2001**
(21) Numéro de dépôt: 98500210.4
(22) Date de dépôt: 25.09.1998
(51) Int. Cl.: B65G 49/06, B60P 3/00

(54) **Chevalet porte-vitres**
Glastransportgestell
Glass transport rack

(30) Priorité: 29.09.1997 ES 9702034
(43) Date de publication de la demande: 31.03.1999
(73) Titulaire: Industrias Laneko, S.A.L., 31840 Huarte-Arakil (Navarra) (ES)
(72) Inventeur: Estaun Solano, Angel, 31840 Huarte-Arakil, (Navarra) (ES)
(74) Mandataire: Urizar Barandiaran, Miguel Angel

(56) Documents cités:
- DE-U- 29 707 713
- FR-A- 2 531 043
- US-A- 4 527 826
- US-A- 5 209 540

## Description

La présente invention traite d'un chevalet porte-vitres de ceux constitués d'une structure-base avec des moyens pour se monter sur la plate-forme de charge d'un véhicule et formée par une pluralité de longerons pourvus de moyens pour supporter/retenir de manière adossée les vitres à transporter en position redressée.

On connaît depuis bien longtemps des chevalets de ce type, qui sont de dimensions différentes-et y compris avec des moyens de nature différente- pour supporter/retenir les vitres en fonctions de leur taille, leur poids ou leur fragilité.

Il est connu les chevalets porte-vitres qui présentent des longerons fixes par rapport à la structure et disposés sur la plate-forme de charge d'un véhicule de manière temporaire ou permanente, mais toujours exclusive, à savoir que, quand on ne transporte pas de vitres (par exemple au retour), il est nécessaire de conserver la plate-forme du véhicule "chargée" avec le chevalet, ce qui la rend inapte pour son utilisation avec d'autres sortes de charges.

Aussi sont connus les chevalets pour transporter des élements, ayant une forme similaire à une vitre, avec une position pliée et dépliée comme dans les brevets US 5209540, DE 29707713 mais dans ces brevets, la plate-forme de charge du véhicule doit être transformée pour incorporer le chevalet, c'est-à-dire la plateforme est une plateforme spécifique.

Le chevalet porte-vitres selon l'invention est indépendent de la plate-forme de charge de manière que la plate-forme peut être quelconque et sans nécessiter de transformation, la plate-forme dans l'invention est normale et l'invention prévoit des moyens pour monter le chevalet sur la plate-forme.

Le chevalet porte-vitres, selon l'invention, du type ayant une position pliée et dépliée est formé par une pluralité de longerons dotés de moyens pour supporter/retenir de manière adossée les vitres à transporter en position redressée; se caractérisant en ce qu'il est constitué d'une structure-base avec des moyens pour se monter sur la plateforme de charge d'un vehicule et en ce que pour se plier et deplier le chevalet comporte:
a) au moins un dispositif d'intervention fluidique, attaché par une extremité à la structure-base et par l'autre extrémité à un jeux de ciseau qui a deux bras qui à leur tour sont articulés par une extrémité à la structure-base et par l' autre extrémité à des jeux de premiers longerons indépendants, qui montent/descendent en maintenant leur horizontalité d'une position inférieure -de pliage- à une position supérieure -de dépliage-;
b) au moins un dispositif d'intervention mécanique attaché par une extrémite à la structure-base et par l'autre extrémité à des jeux de seconds longerons pour limiter la hauteur du chevalet dans sa position de depliage les seconds longerons étant attaché d'une manière basculant aux premiers longerons avec la possibilité de basculer par rapport à eux entre deux positions extrêmes respectivement horizontale -de pliage- et redressée -de dépliage-;
c) au moins un appui pour chaque jeu desdits seconds longerons qui, émergeant de leur structure-base, limite la hauteur du chevalet dans sa position de pliage.

En position de dépliage, le chevalet se comporte comme un chevalet standard mais en position de pliage sa hauteur est minimale et offre un plan supérieur totalement horizontal, qui se constitue en plan de charge pour la plate-forme du véhicule, laquelle peut ainsi admettre, outre le chevalet porte-vitres, une autre charge d'un tout autre type.

Pour mieux apprécier l'objet de la présente invention, il a été représenté en plans une forme préférentielle de réalisation pratique, susceptible de changements accessoires qui n'en altèrent pas le fondement.

La figure 1 représente une vue frontale d'un chevalet porte-vitres, selon l'invention, en position dépliée.

La figure 2 représente une vue frontale d'un chevalet porte-vitres, selon l'invention, en position pliée.

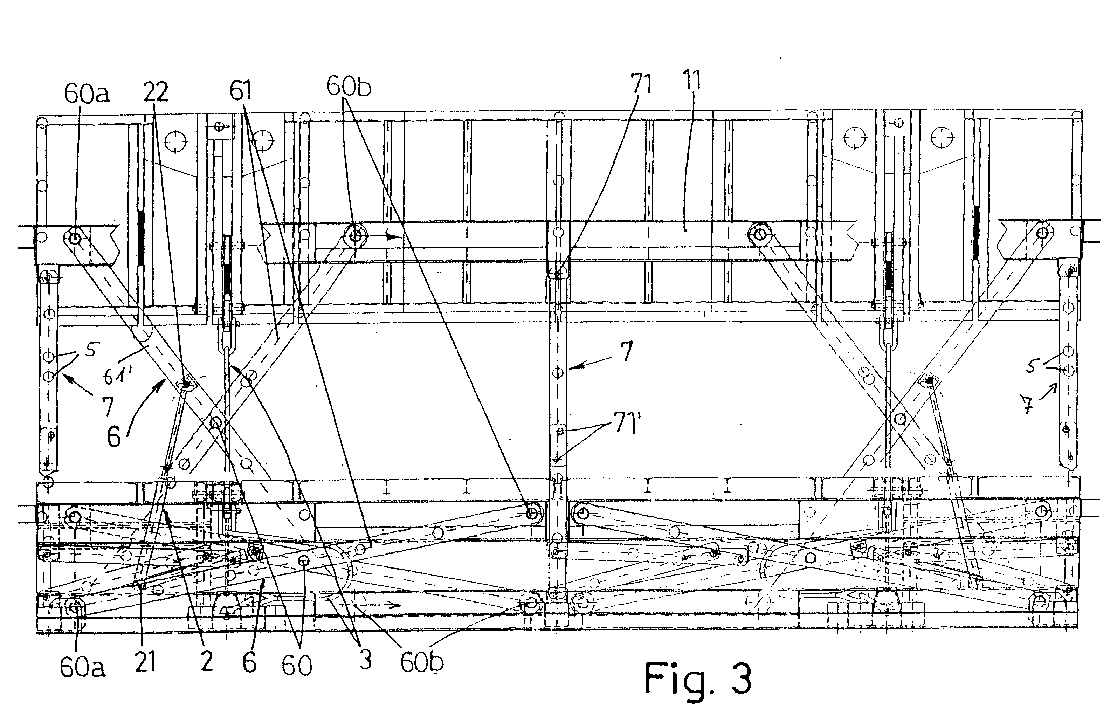

La figure 3 représente une projection verticale du chevalet porte-vitres, selon l'invention, en position dépliée, correspondant à la figure 1. On a représenté par des traits, le chevalet porte-vitres en position pliée, correspondant à la figure 2.

On y a annoté les références et particularités suivantes :
1.- Structure-base.
2.- Dispositifs d'intervention fluidique.
3.- Dispositifs d'intervention mécanique.
4.- Appuis.
5, 5'.- Moyens porte-vitres.
6.- Jeux de ciseau.
7.- Tirants démontables.
11, 11'.- Longerons
11a.- Articulations.
21.- Chemise.
22.- Piston.
61, 61'.- Bras.
60a.- Articulations fixes.
60b.- Appuis à glissières.
71, 71'.- Articulations.

On décrit ci-après un exemple de réalisation pratique, non limitative, de la présente invention.

La présente invention traite d'un chevalet porte-vitres de ceux constitués sur une structure-base (1) pourvu de moyens pour se monter sur la plate-forme de charge d'un véhicule et constituée par une pluralité de longerons (11), (11') qui lui sont fixés et avec des moyens (5), (5') pour supporter/retenir de manière adossée les vitres à charger.

Conformément à l'invention, et selon la réalisation représentée, les longerons (11), (11') sont disposés de manière non fixe sur la structure-base (1) et comportent des moyens associés (2), (3), (4) pour faire en sorte que les longerons (11), (11') adoptent au minimum deux positions différentes par rapport à la structure-base (1) - positions qui correspondent à celles de pliage et dépliage du chevalet porte-vitres.

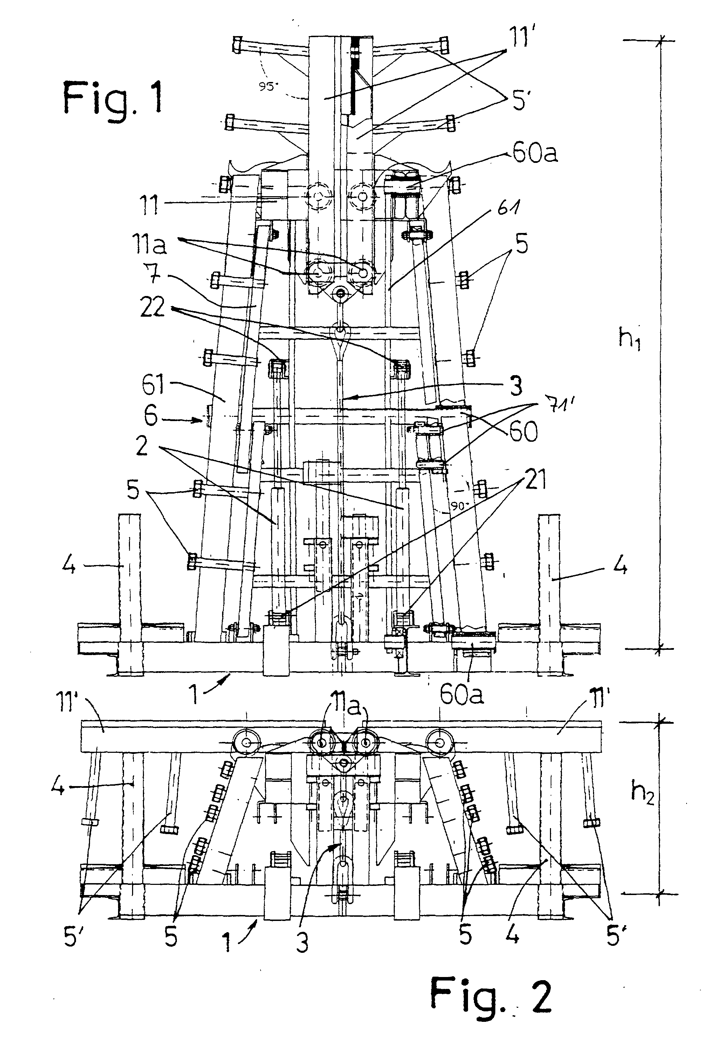

Pour la réalisation pratique -non limitative- représentée sur les plans ci-joints :
- Les moyens (2) sont des dispositifs d'intervention fluidique - cylindres hydrauliques ou pneumatiques- associés à des jeux de ciseau (6) dont les bras (61) (61'), à leur tour, sont articulés à des longerons (11) et à la structure-base (1) par des articulations fixes (60a) par une de leurs extrémités. L'autre extrémité des bras (61) va librement guidé (60b) (voir figure 2). Chaque cylindre hydropneumatique (2) est articulé par l'extrémité de sa chemise (21) à la structure-base (1) et par l'extrémité de son piston (22) à l'un des bras (61') du ciseau correspondant (6).
- Les moyens (3) sont, en particulier, des tenseurs non rigides associés à des longerons (11') et à la structure-base (1) par leurs extrémités respectives. Ils limitent la course en hauteur de l'ensemble, à savoir, sa position de dépliage.
- Les moyens (4) sont des appuis qui émergent de la propre structure-base (1). Ils limitent la course en pivotement des longerons, autrement dit, la position de pliage de l'ensemble.

Les longerons (11) et les longerons (11') sont articulés entre eux et ceux-ci (11') ont la possibilité de pivoter par rapport aux premiers (11) - articulations (11a).

Le chevalet porte-vitres, selon l'invention, se complète par des tirants démontables (7) qui s'articulent (71) au moins à la structure-base (1) et aux longerons (11), l'ensemble étant en position dépliée. En fonction de la longueur desdits tirants (7), il peut arriver qu'il y ait des articulations intermédiaires (71') qui relient en continuité diverses portions de tirant (7) même si ces articulations (71') doivent toujours se présenter par paires afin de conserver le raidissage du tirant (7) ainsi constitué.

Sur la base de cette structuration, et en partant d'une position dépliée permettant de charger des vitres et occupant une hauteur totale (h1) pour plier le chevalet porte-vitres, il suffit en premier lieu d'enlever les tirants (7) puis d'actionner les jeux de cylindres (2) pour basculer les ciseaux (6) et faire descendre les longerons (11) toujours maintenus en position horizontale. Les longerons (11') basculent par rapport aux longerons (11) jusqu'à buter sur les appuis (4), lesquels à ce moment sont maintenus également sur un plan horizontal en constituant un plan de charge à une hauteur minimum (h₂) sur la plate-forme du véhicule sur laquelle se trouve disposé le chevalet porte-vitres.

## Revendications

1. Chevalet porte-vitres, du type ayant une position pliée et dépliée, formé par une pluralité de longerons (11) dotés de moyens (5) pour supporter/retenir de manière adossée les vitres à transporter en position redressée; se caractérisant en ce que le chevalet est constitué d'une structure-base (1) avec des moyens pour se monter sur la plateforme de charge d'un véhicule et en ce que pour se plier et deplier, le chevalet comporte:
a) au moins un dispositif (2) d'intervention fluidique, attaché par une extrémité à la structure-base (1) et par l'autre extrémité à un jeux de ciseaux (6) qui a deux bras (61), (61') qui, à leur tour, sont articulés par une extrémité à la structure-base (1) et par l' autre extrémité à des jeux de premiers longerons (11) indépendants, qui montent/descendent en maintenant leur horizontalité d'une position inférieure -de pliage- à une position supérieure -de dépliage-;
b) au moins un dispositif d'intervention mécanique (3) attaché par une extrémite à la structure-base (1) et par l'autre extremité à des jeux de seconds longerons (11') pour limiter la hauteur (h₁) du chevalet dans sa position de depliage, les seconds longerons (11') étant attaché d'une manière basculant aux premiers longerons (11) avec la possibilité de basculer par rapport à eux entre deux positions extrêmes respectivement horizontale -de pliage- et redressée -de dépliage-;
c) au moins un appui (4) pour chaque jeu desdits seconds longerons (11') qui, émergeant de leur structure-base (1), limite la hauteur (h₂) du chevalet dans sa position de pliage.

2. Chevalet porte-vitres, selon revendication précédente, se caractérisant en ce que chaque dispositif d'intervention fluidique (2) est un jeu de cylindres hydropneumatiques dont la chemise est articulée (21) à la structure-base (1) et son piston articulé (22) à l'un des bras (61') du jeu de ciseaux (6) correspondant.

3. Chevalet porte-vitres, selon l'une des revendications précédentes, se caractérisant en ce que chaque dispositif d'intervention mécanique est un tenseur (3 ) non rigide, pouvant se ramasser et articulé par ses extrémités, respectivement, à la structure-base (1) et aux seconds longerons (11').

4. Chevalet porte-vitres, selon l'une des revendications précédentes, se caractérisant en ce que, de surcroît, il comporte un ou plusieurs tirants (7) démontables, mettant en rapport entre eux la structure-base (1) et lesdits premiers longerons (11), en contribuant au raidissage de l'ensemble dans sa position dépliée.

## Patentansprüche

1. Zusammenklappbares Traggestell für Glasplatten, bestehend aus verschiedenen Lägsholmen (11) und versehen mit den erforderlichen Vorrichtungen (5) um in vertikaler Stellung zu transportierende Glasplatten aufzunehmen und anliegend zu halten, **dadurch gekennzeichnet, daß** das Gestell aus einer Grundstruktur (1) mit Vorrichtungen besteht, die dazu geeignet sind, dasselbe auf den Ladepritschen von Transportfahrzeugen zu transportieren, und daß es zusammen- und auseinanderklappbar ist, wofür es über die nachstehend beschriebenen Elemente verfügt:
a) Mindestens eine mit einem Druckmedium betriebene Stellvorrichtung (2), die an einem Ende mit der Grundstruktur (1) und am anderen Ende mit einem Scherenmechanismus (6) mit zwei Armen (61) (61') verbunden ist, wobei die beiden Arme ihrerseits an einem ihrer Enden über ein Gelenk mit der Grundstruktur (1) und mit dem anderen Ende mit den Sätzen der ersten unabhängigen Lägsholme (11) verbunden sind, die hoch- und niederfahrbar sind und ihre horizontale Stellung von der untersten - eingeklappten - bis zu der obersten - ausgeklappten - Stellung beibehalten.
b) Mindestens eine mechanisch betriebene Stellvorrichtung (3), die an einem Ende mit der Grundstruktur (1) und am anderen Ende mit den Sätzen der zweiten Lägsholme (11') zur Begrenzung der Höhe (h₁) des Traggestells in seiner eingeklappten Stellung verbunden ist, wobei die zweiten Lägsholme (11') schwenkbar an die ersten Lägsholme (11) angebunden sind und sich mit Bezug auf diese zwischen zwei Endstellungen, d.h. der horizontalen - eingeklappten - und der vertikalen-ausgeklappten- Stellung bewegen können.
c) Mindestens eine Abstützung (4) für jeden Satz der zweiten Lägsholme (11'), die auf der Grundstruktur (1) angebunden die Höhe (h₂) des Traggestells in seiner eingeklappten Stellung begrenzt.

2. Traggestell für Glasplatten nach dem vorangegangen Patentanspruch, **dadurch gekennzeichnet, daß** jede der mit einem Druckmedium betriebene Stellvorrichtungen (2) aus einem Satz hydropneumatischer Zylinder besteht, deren Gehäuse über ein Gelenk (21) an der Grundstruktur (1) und deren gelenkiger Kolben (22) an einem der Arme (61') des jeweiligen Scherenmechanismus (6) angebunden ist.

3. Traggestell für Glasplatten nach einem beliebigen der vorangegangen Patentansprüche, **dadurch gekennzeichnet, daß** jede der mechanischen Stellvorrichtungen aus einem nicht feststehenden Spannmechanismus (3) besteht, der zusammengezogen werden kann und an seinen Enden über ein Gelenk an die Grundstruktur (1) und die zweiten Lägsholme (11') angebunden ist.

4. Traggestell für Glasplatten nach einem beliebigen der vorangegangen Patentansprüche, **dadurch gekennzeichnet, daß** es zusätzlich über eine oder mehrere demontierbaren Verstrebungen (7) verfügt, welche die Grundstruktur (1) und die ersten Lägsholme (11) miteinander verbinden und damit zur Versteifung des kompletten Zusammenbaus in der ausgeklappten Stellung beitragen.

## Claims

1. Glass-holder stand of the type that has a folded and an unfolded position, comprised of different rails (11) equipped with means (5) to support or fasten, and attached to them, the glass to be transported in a vertical position, which is characterised because the stand has a base structure (1) with means to be mounted on the loading platform of a vehicle and because to fold up and unfold the stand includes.
a) at least one fluidic intervention device (2), joined on one end to the base structure (1) and on the other end to a set of shears (6), which has two arms (61), 61'), which, in turn, are articulated on one end to the base structure (1) and on the other end to the set of the first independent rails (11), which go up and down, remaining horizontal from a lower -folded- position to an upper -unfolded- position.
b) at least one mechanical intervention device (3) joined on one end to the base structure (1) and on the other end to the sets of the second rails (11') to limit the height (h1) of the stand in its unfolded position, the second rails (11') being joined in tilting mode to the first rails (11) with the possibility of moving respect to them between two end positions respectively, horizontal -folding- and vertical-unfolding-;
c) at least one support (4) for each set of the second rails (11'), which, coming from its base structure (1) limits the height (h2) of the stand in its folded position.

2. Glass-holder stand, according to the previous claim, which is characterised because each fluidic intervention device (2) is a set of hydro-pneumatic cylinders whose casing is articulated (21) to the base structure (1) and its piston articulated (22) to one of the arms (61') of the relative set of shears (6).

3. Glass-holder stand, according to either of the previous claims, which is characterised because each mechanical intervention device is a non-rigid tightening device (3), which can be folded away and which is articulated at the ends to the base structure (1) and to the second rails (11').

4. Glass-holder stand, according to any of the previous claims, which is characterised because it also has one or several removable tie rods (7), linking together the base structure (1) and the first rails (11), contributing to the rigidity of the whole unit in its unfolded position.
